(19) Europäisches Patentamt / European Patent Office / Office européen des brevets

(11) **EP 2 599 247 B1**

(12) **EUROPEAN PATENT SPECIFICATION**

(45) Date of publication and mention
of the grant of the patent:
**19.12.2018 Bulletin 2018/51**

(51) Int Cl.:
***H04J 3/06*** *(2006.01)*

(21) Application number: **10737069.4**

(22) Date of filing: **29.07.2010**

(86) International application number:
**PCT/EP2010/061033**

(87) International publication number:
**WO 2012/013233 (02.02.2012 Gazette 2012/05)**

(54) **METHOD AND DEVICE FOR PROCESSING DATA ON A CONNECTION BETWEEN TWO NODES OF A COMMUNICATION NETWORK**

VERFAHREN UND VORRICHTUNG ZUR DATENVERARBEITUNG AUF EINER VERBINDUNG ZWISCHEN ZWEI KNOTEN EINES KOMMUNIKATIONSNETZWERKES

PROCÉDÉ ET DISPOSITIF DE TRAITEMENT DE DONNÉES SUR UNE CONNEXION ENTRE DEUX NŒUDS D'UN RÉSEAU DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**05.06.2013 Bulletin 2013/23**

(73) Proprietor: **ADTRAN GmbH**
**10557 Berlin (DE)**

(72) Inventor: **ARMBRUSTER, Friedrich**
**81379 München (DE)**

(74) Representative: **Brachmann, Roland W.**
**Von Lieres Brachmann Schulze**
**Patentanwälte**
**Grillparzerstrasse 12A**
**81675 München (DE)**

(56) References cited:
**US-A1- 2007 223 537      US-A1- 2008 101 277**
**US-A1- 2009 147 806**

- **TSURU M ET AL: "Estimation of clock offset from one-way delay measurement on asymmetric paths", APPLICATIONS AND THE INTERNET (SAINT) WORKSHOPS, 2002. PROCEEDINGS. 2002 SYMPOSIUM ON NARA, JAPAN 28 JAN.-1 FEB. 2002, LOS ALAMITOS, CA, USA,IEEE COMPUT. SOC, US, 28 January 2002 (2002-01-28), pages 126-133, XP010587872, DOI: DOI:10.1109/SAINTW.2002.994563 ISBN: 978-0-7695-1450-5**

**Description**

The invention relates to a method and to a device for processing data on a connection between two nodes of a communication network. Also, a communication system comprising at least one such device is suggested.

In packet-oriented communication networks, frequency and/or time require synchronization. In order to provide an accurate time synchronization, it is necessary to determine how long it takes for a packet to travel from a clock source to a clock client.

A Precision Time Protocol (PTP) is known as a high-precision time protocol for synchronization used in measurement and control systems residing on a local area network. Accuracy in the sub-microsecond range may be achieved with low-cost implementations. The PTP was originally defined in the IEEE 1588-2002 standard, officially entitled "Standard for a Precision Clock Synchronization Protocol for Networked Measurement and Control Systems". In 2008, a revised standard IEEE 1588-2008 was released, which is also known as PTP Version 2 (or "IEEE 1588v2").

The IEEE 1588 standards describe a hierarchal master-slave architecture for clock distribution purposes. Under this architecture, a time distribution system comprises one or more communication mediums (network segments), and one or more clocks. The ordinary clock is a device with a single network connection and is either the source of (master) or destination for (slave) a synchronization reference. A boundary clock has multiple network connections and can accurately bridge synchronization from one network segment to another. A synchronization master is determined for each of the network segments in the system. A root timing reference is referred to as a grandmaster, which transmits synchronization information to the clocks residing on its network segment. Simplified PTP systems may comprise ordinary clocks connected to a single network (without boundary clocks being used); in such scenario, a grandmaster is determined and all other clocks synchronize directly to it.

IEEE 1588-2008 introduces a clock associated with network equipment used to convey PTP messages. The transparent clock modifies PTP messages as they pass through the device. Timestamps in the messages are corrected for time spent traversing the network equipment. This scheme improves distribution accuracy by compensating delivery variability across the network.

Hence, some efforts have been spent correcting timing information that is embedded into a packet which traverses a network. For example, a time can be measured for a packet to be handled by a node or element of the network. An ingress and/or egress timestamp can be added to the packet or the difference between ingress and egress time stamp (that corresponds to the delay the packet experiences in such node) can be used to correct the original timestamp. Document US 2007/0223537 shows a method and apparatus for determining a relative time alignment between two bases using the propagation delay of packets of different sizes.

Document US 2009/0147806 provides a method and an apparatus where transfer delays are determined using packets of different lengths.

Furthermore, attempts to correct the transmission link delays are made, which work well as long as both directions of a link have the same speed. Then, the involved nodes may measure the Round Trip Time (RTT) of a packet that is conveyed over a link (i.e., the packet travels back and forth via the link) and assume that the one way delay time is half of the RTT.

Unfortunately, this approach does not work with links that provide different bandwidths per direction. In such case, the one way delay cannot be determined to amount to half of the RTT. For example, xDSL lines typically provide a bandwidth in downlink direction (towards the user's modem) that is several times higher than the bandwidth in uplink direction (towards the core network or the provider).

The **problem** to be solved is to overcome the disadvantages stated before and in particular to provide an efficient solution that allows determining a delay in environments utilizing asymmetric connections or links.

This problem is solved according to the features of the independent claims. Further embodiments result from the depending claims.

In order to overcome this problem, a method for processing data on a connection between a first node and a second node is provided,

- wherein the first node conveys first data of a first size to the second node;
- wherein the second node conveys second data of a second size to the first node;
- wherein the first node determines a first time based on a duration from the first data being sent until the second data is received;
- wherein the first node conveys third data of the second size to the second node;
- wherein the second node conveys fourth data of the first size to the first node;
- wherein the first node determines a second time based on a duration from the third data being sent until the fourth data is received.

It is noted that said data are in particular packets that are conveyed via a packet-oriented network. The first node and the second node may be any component within a network. The first and second node can be directly connected or they may be connected via different components and/or networks. The network may comprise a wireless and/or a wired (fixed) network.

This solution can be used for assessing a connection that comprises an asymmetric link, e.g., different bandwidths in uplink and downlink direction.

In an embodiment, the first time and the second time are round-trip times, for which at least partially handling delays are eliminated.

The round-trip times may be measured using a PTP, e.g., according to an IEEE 1588 standard. Hence, handling delays in the nodes or on the communication path(s) could be eliminated.

In another embodiment, a bandwidth of the link between the first node and the second node is determined.

In a further embodiment, the bandwidth of the link between the first node and the second node is determined as

$$B_{ab} = \frac{S_2^2 - S_1^2}{(S_2 \cdot RTT_2) - (S_1 \cdot RTT_1)},$$

wherein

$B_{ab}$    denotes the bandwidth of the link between the first node and the second node,
$S_1$    denotes the first size of the data,
$S_2$    denotes the second size of the data,
$RTT_1$    denotes the first time,
$RTT_2$    denotes the second time.

In a next embodiment, a bandwidth of the link between the second node and the first node is determined.

It is also an embodiment that the bandwidth of the link between the second node and the first node is determined as

$$B_{ba} = \frac{S_2^2 - S_1^2}{(S_2 \cdot RTT_1) - (S_1 \cdot RTT_2)},$$

wherein

$B_{ba}$    denotes the bandwidth of the link between the second node and the first node,
$S_1$    denotes the first size of the data,
$S_2$    denotes the second size of the data,
$RTT_1$    denotes the first time,
$RTT_2$    denotes the second time.

Pursuant to another embodiment, a delay on the link between the first node and the second node is determined, in particular dependent on the first and/or the second packet size.

According to an embodiment, the delay on the link between the first node and the second node is determined as

$$D_1 = \frac{S_1}{B_{ab}},$$

$$D_3 = \frac{S_2}{B_{ab}},$$

wherein

$D_1$    denotes the delay for the first data,
$D_3$    denotes the delay for the third data,
$B_{ab}$    denotes the bandwidth of the link between the first node and the second node,
$S_1$    denotes the first size of the data,

$S_2$    denotes the second size of the data.

According to another embodiment, a delay on the link between the second node and the first node is determined, in particular dependent on the first and/or the second packet size.

In yet another embodiment, the delay on the link between the second node and the first node is determined as

$$D_2 = \frac{S_2}{B_{ba}},$$

$$D_4 = \frac{S_1}{B_{ba}},$$

wherein

$D_2$    denotes the delay for the second data,
$D_4$    denotes the delay for the fourth data,
$B_{ba}$    denotes the bandwidth of the link between the second node and the first node,
$S_1$    denotes the first size of the data,
$S_2$    denotes the second size of the data.

It is noted that the bandwidths and/or delays may be determined by the first node or any other element of the network; in the latter case, the information required to determined the bandwidths and/or delays can be conveyed to this other element of the network.

Based on such bandwidths and/or delays determined according to the solution presented herein, further adjustments can be provided, e.g., by an operator or a network management entity.

According to a next embodiment, the first size and the second size of data are different.

Advantageously, the first size and the second size may differ at least by a factor of 2.

The problem stated above is also solved by a device comprising or being associated with a processing unit that is arranged such that the method according to any of the preceding claims is executable thereon.

It is noted that the steps of the method stated herein may be executable on this processing unit as well.

The problem can also be solved by a device comprising a processing unit that is arranged for

- conveying first data of a first size to a second node;
- obtaining second data of a second size from the second node;
- determining a first time based on the first data sent and the second data received;
- conveying third data of the second size to the second node;
- obtaining fourth data of the first size from the second node;
- determining a second time based on the third data sent and the fourth data received.

The first and second time determined may each be a RTT determined according to a PTP. The device may be arranged such that a bandwidth towards the second node is determined and/or a bandwidth from the second node to the device is determined. Furthermore, with such bandwidths, the delays for the different data (packets) can be determined.

According to an embodiment, said device is a network element or node of a network, in particular of a packet-oriented network.

It is further noted that said processing unit can comprise at least one, in particular several means that are arranged to execute the steps of the method described herein. The means may be logically or physically separated; in particular several logically separate means could be combined in at least one physical unit.

Said processing unit may comprise at least one of the following: a processor, a microcontroller, a hard-wired circuit, an ASIC, an FPGA, a logic device.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein.

Furthermore, the problem stated above is solved by a communication system comprising at least one device as described herein.

Embodiments of the invention are shown and illustrated in the following figures:

Fig.1    shows a schematic diagram visualizing two nodes connected via a communication path, which comprises two asymmetric links;

Fig.2    shows a symbolic message diagram between two nodes of a packet-oriented network visualizing as how bandwidths and delays of a connection with asymmetric links could be determined.

The solution presented allows determining asymmetric delays in a network. This is in particular achieved by sending ping-pong messages of variable size between two ends of the network, measuring a RTT, and then calculating the bandwidth and/or packet delays for each link direction.

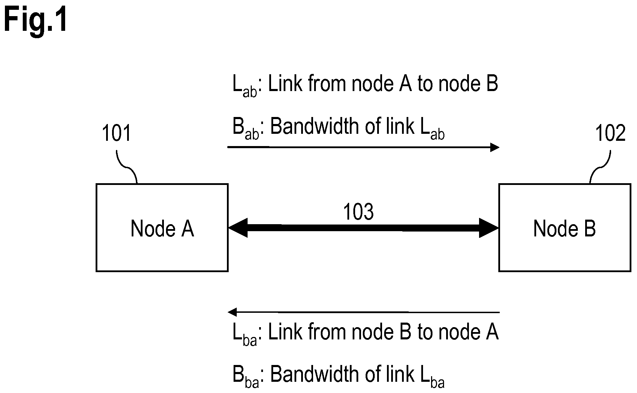

**Fig.1** shows a node 101 that is connected to a node 102 via a communication path 103. The node 101 is also referred to as node A and the node 102 is also referred to as node B.

The communication path 103 is capable of conveying packets

-     from the node A to the node B via a link $L_{ab}$ with a bandwidth $B_{ab}$ and
-     from the node B to the node A via a link $L_{ba}$ with a bandwidth $B_{ba}$.

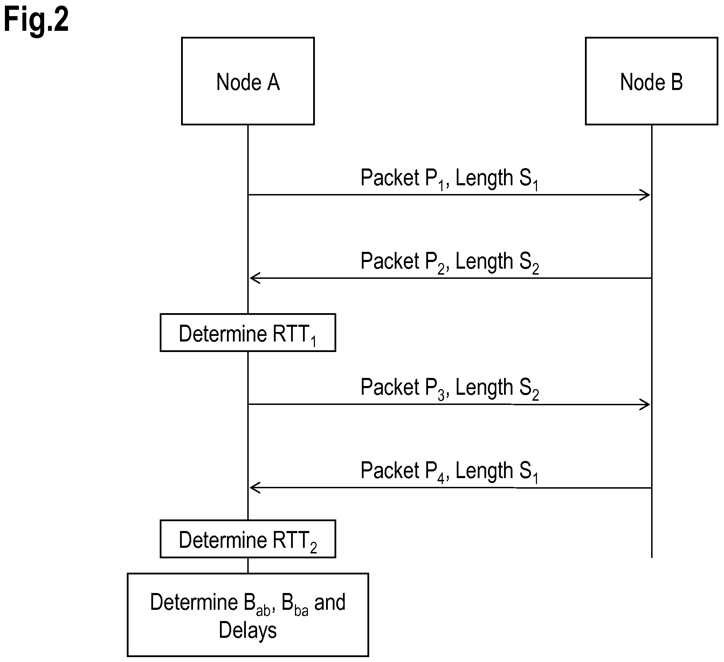

For determining the bandwidths $B_{ab}$ and $B_{ba}$ and thus for determining the delays for the packets of a particular data length, in particular the following steps are suggested (see also **Fig.2**):

Step 1:

The node A sends a packet $P_1$ of a size $S_1$ to the node B and the node B responds with a packet $P_2$ of a size $S_2$. The sizes $S_1$ and $S_2$ are different, wherein a small difference may suffice. However, for practical reasons it will be beneficial if the sizes $S_1$ and $S_2$ differ at least by a factor of 2.

The node A measures a round-trip time $RTT_1$ with elimination of handling delays that occur in the node A, on the communication path 103 and the node B (e.g., as described in IEEE 1588v2). Hence, the round-trip time $RTT_1$ comprises a sum of a link path delay $D_1$ for the packet $P_1$ conveyed over the link $L_{ab}$ and of a link path delay $D_2$ for the packet $P_2$ conveyed over the link $L_{ba}$:

$$RTT_1 = D_1 + D_2 \qquad\qquad (1).$$

Step 2:

The node A sends a packet $P_3$ of the size $S_2$ to the node B and the node B responds with a packet $P_4$ of the size $S_1$.

The node A measures a round-trip time $RTT_2$ with elimination of handling delays; thus, the round-trip time $RTT_2$ comprises a sum of a link path delay $D_3$ for the packet $P_3$ conveyed over the link $L_{ab}$ and of a link path delay $D_4$ for the packet $P_4$ conveyed over the link $L_{ba}$:

$$RTT_2 = D_3 + D_4 \qquad\qquad (2).$$

Hence, the node A can determine the delays that occurred for the packet $P_1$ sent via the link $L_{ab}$ and for the packet $P_4$ sent over the link $L_{ba}$, which both have the same length $S_1$. Accordingly, the node A can determine the delays for the packets $P_2$, $P_3$.

The delays $D_1$ to $D_4$ can be determined as follows:

$$D_1 = \frac{S_1}{B_{ab}} \qquad\qquad (3)$$

$$D_2 = \frac{S_2}{B_{ba}} \qquad\qquad (4)$$

$$D_3 = \frac{S_2}{B_{ab}} \tag{5}$$

$$D_4 = \frac{S_1}{B_{ba}} \tag{6},$$

wherein $B_{ab}$ denotes the bandwidth on the link $L_{ab}$ and $B_{ba}$ denotes the bandwidth on the link $L_{ba}$.

The equations (3) to (6) can be inserted in equations (1) and (2), which can then be re-written as:

$$B_{ab} = \frac{S_2^2 - S_1^2}{(S_2 \cdot RTT_2) - (S_1 \cdot RTT_1)} \tag{7}$$

$$B_{ba} = \frac{S_2^2 - S_1^2}{(S_2 \cdot RTT_1) - (S_1 \cdot RTT_2)} \tag{8}.$$

This allows calculating packet delays as well as bandwidths per link on the node A, which also measures the round-trip times.

Example:

As an example, the approach presented can be used to measure the asymmetric bandwidth of a DSL line:

The node A and the node B are connected via a DSL line. The measurements are processed on the node A, the sizes of the packets (packet lengths) amount to

$$S_1 = 512 \text{bit};$$

$$S_2 = 1024 \text{bit}.$$

The node B responds to the packets received as described above. The node A determines (measures) the following round-trip times:

$$RTT_1 = 2.093 \text{ms};$$

$$RTT_2 = 1.186 \text{ms}.$$

Utilizing equations (7) and (8), the node A determines the following bandwidths:

$$B_{ab} = 5.505 \text{kbit/s};$$

$$B_{ba} = 512 \text{kbit/s}.$$

The delay can then be determined based on equations (3) to (6) :

$$D_1 = 0.093 \text{ms};$$

$$D_2 = 2.000\text{ms;}$$

$$D_3 = 0.186\text{ms;}$$

$$D_4 = 1.000\text{ms}$$

**List of Abbreviations:**

| | |
|---|---|
| IEEE | Institute of Electrical & Electronics Engineers |
| PTP | Precision Time Protocol |
| RTT | Round-Trip Time |

**Claims**

1. A method for processing data on a connection between a first node (101) and a second node (102),

   - wherein the first node (101) conveys first data of a first size to the second node (102);
   - wherein the second node (102) conveys second data of a second size to the first node (101);
   - wherein the first node (101) determines a first time ($RTT_1$) based on a duration from the first data being sent until the second data is received;
   - wherein the first node (101) conveys third data of the second size to the second node (102);
   - wherein the second node (102) conveys fourth data of the first size to the first node (101);
   - wherein the first node (101) determines a second time ($RTT_2$) based on a duration from the third data being sent until the fourth data is received;
   - wherein the first size and the second size of data are different.

2. The method according to claim 1, wherein the first time ($RTT_1$) and the second time ($RTT_2$) are round-trip times, for which handling delays are eliminated.

3. The method according to any of the preceding claims, wherein a bandwidth of the link between the first node (101) and the second node (102) is determined.

4. The method according to claim 3, wherein the bandwidth of the link between the first node (101) and the second node (102) is determined as

$$B_{ab} = \frac{S_2^2 - S_1^2}{(S_2 \cdot RTT_2) - (S_1 \cdot RTT_1)},$$

wherein

   $B_{ab}$ denotes the bandwidth of the link between the first node and the second node,
   $S_1$ denotes the first size of the data,
   $S_2$ denotes the second size of the data,
   $RTT_1$ denotes the first time,
   $RTT_2$ denotes the second time.

5. The method according to any of the preceding claims, wherein a bandwidth of the link between the second node (102) and the first node (101) is determined.

6. The method according to claim 5, wherein the bandwidth of the link between the second node (102) and the first node (101) is determined as

$$B_{ba} = \frac{S_2^2 - S_1^2}{(S_2 \cdot RTT_1) - (S_1 \cdot RTT_2)},$$

wherein

$B_{ba}$ denotes the bandwidth of the link between the second node and the first node,
$S_1$ denotes the first size of the data,
$S_2$ denotes the second size of the data,
$RTT_1$ denotes the first time,
$RTT_2$ denotes the second time.

7. The method according to any of the preceding claims, wherein a delay on the link between the first node (101) and the second node (102) is determined, in particular dependent on the first and/or the second packet size.

8. The method according to claim 7, wherein the delay on the link between the first node (101) and the second node (102) is determined as

$$D_1 = \frac{S_1}{B_{ab}},$$

$$D_3 = \frac{S_2}{B_{ab}},$$

wherein

$D_1$ denotes the delay for the first data,
$D_3$ denotes the delay for the third data,
$B_{ab}$ denotes the bandwidth of the link between the first node and the second node,
$S_1$ denotes the first size of the data,
$S_2$ denotes the second size of the data.

9. The method according to any of the preceding claims, wherein a delay on the link between the second node (102) and the first node (101) is determined, in particular dependent on the first and/or the second packet size.

10. The method according to claim 9, wherein the delay on the link between the second node (102) and the first node (101) is determined as

$$D_2 = \frac{S_2}{B_{ba}},$$

$$D_4 = \frac{S_1}{B_{ba}},$$

wherein

$D_2$ denotes the delay for the second data,
$D_4$ denotes the delay for the fourth data,
$B_{ba}$ denotes the bandwidth of the link between the second node and the first node,
$S_1$ denotes the first size of the data,
$S_2$ denotes the second size of the data.

11. A device comprising a processing unit that is arranged such that the method according to any of the preceding claims is executable thereon.

**12.** The device according to claim 11, wherein said device is a network element or node of a network, in particular of a packet-oriented network.

**13.** A communication system comprising at least one device according to any of claims 11 or 12.

**Patentansprüche**

**1.** Verfahren zum Verarbeiten von Daten auf einem Verbindungsweg zwischen einem ersten Knoten (101) und einem zweiten Knoten (102),

- wobei der erste Knoten (101) erste Daten mit einer ersten Größe an den zweiten Knoten (102) übermittelt;
- wobei der zweite Knoten (102) zweite Daten mit einer zweiten Größe an den ersten Knoten (101) übermittelt;
- wobei der erste Knoten (101) eine erste Zeit ($RTT_1$) basierend auf einer Dauer ab dem Senden der ersten Daten bis zum Empfang der zweiten Daten bestimmt;
- wobei der erste Knoten (101) dritte Daten mit der zweiten Größe an den zweiten Knoten (102) übermittelt;
- wobei der zweite Knoten (102) vierte Daten mit der ersten Größe an den ersten Knoten (101) übermittelt;
- wobei der erste Knoten (101) eine zweite Zeit ($RTT_2$) basierend auf einer Dauer ab dem Senden der dritten Daten bis zum Empfang der vierten Daten bestimmt;
- wobei die erste Größe und die zweite Größe von Daten unterschiedlich sind.

**2.** Verfahren nach Anspruch 1, wobei die erste Zeit ($RTT_1$) und die zweite Zeit ($RTT_2$) Umlaufzeiten (Round-Trip Times) sind, für die Behandlungsverzögerungen eliminiert werden.

**3.** Verfahren nach einem der vorhergehenden Ansprüche, wobei eine Bandbreite der Strecke zwischen dem ersten Knoten (101) und dem zweiten Knoten (102) bestimmt wird.

**4.** Verfahren nach Anspruch 3, wobei die Bandbreite der Strecke zwischen dem ersten Knoten (101) und dem zweiten Knoten (102) bestimmt wird als

$$B_{ab} = \frac{S_2^2 - S_1^2}{(S_2 \cdot RTT_2) - (S_1 \cdot RTT_1)},$$

wobei

$B_{ab}$ die Bandbreite der Strecke zwischen dem ersten Knoten und dem zweiten Knoten bezeichnet,
$S_1$ die erste Größe der Daten bezeichnet,
$S_2$ die zweite Größe der Daten bezeichnet,
$RTT_1$ die erste Zeit bezeichnet,
$RTT_2$ die zweite Zeit bezeichnet.

**5.** Verfahren nach einem der vorhergehenden Ansprüche, wobei eine Bandbreite der Strecke zwischen dem zweiten Knoten (102) und dem ersten Knoten (101) bestimmt wird.

**6.** Verfahren nach Anspruch 5, wobei die Bandbreite der Strecke zwischen dem zweiten Knoten (102) und dem ersten Knoten (101) bestimmt wird als

$$B_{ba} = \frac{S_2^2 - S_1^2}{(S_2 \cdot RTT_1) - (S_1 \cdot RTT_2)},$$

wobei

$B_{ba}$ die Bandbreite der Strecke zwischen dem zweiten Knoten und dem ersten Knoten bezeichnet,
$S_1$ die erste Größe der Daten bezeichnet,

$S_2$ die zweite Größe der Daten bezeichnet,
$RTT_1$ die erste Zeit bezeichnet,
$RTT_2$ die zweite Zeit bezeichnet.

7. Verfahren nach einem der vorhergehenden Ansprüche, wobei eine Verzögerung auf der Strecke zwischen dem ersten Knoten (101) und dem zweiten Knoten (102) bestimmt wird, insbesondere abhängig von der ersten und/oder der zweiten Paketgröße.

8. Verfahren nach Anspruch 7, wobei die Verzögerung auf der Strecke zwischen dem ersten Knoten (101) und dem zweiten Knoten (102) bestimmt wird als

$$D_1 = \frac{S_1}{B_{ab}},$$

$$D_3 = \frac{S_2}{B_{ab}},$$

wobei

$D_1$ die Verzögerung für die ersten Daten bezeichnet,
$D_3$ die Verzögerung für die dritten Daten bezeichnet,
$B_{ab}$ die Bandbreite der Strecke zwischen dem ersten Knoten und dem zweiten Knoten bezeichnet,
$S_1$ die erste Größe der Daten bezeichnet,
$S_2$ die zweite Größe der Daten bezeichnet.

9. Verfahren nach einem der vorhergehenden Ansprüche, wobei eine Verzögerung auf der Strecke zwischen dem zweiten Knoten (102) und dem ersten Knoten (101) bestimmt wird, insbesondere abhängig von der ersten und/oder der zweiten Paketgröße.

10. Verfahren nach Anspruch 9, wobei die Verzögerung auf der Strecke zwischen dem zweiten Knoten (102) und dem ersten Knoten (101) bestimmt wird als

$$D_2 = \frac{S_2}{B_{ba}},$$

$$D_4 = \frac{S_1}{B_{ba}},$$

wobei

$D_2$ die Verzögerung für die zweiten Daten bezeichnet,
$D_4$ die Verzögerung für die vierten Daten bezeichnet,
$B_{ba}$ die Bandbreite der Strecke zwischen dem zweiten Knoten und dem ersten Knoten bezeichnet,
$S_1$ die erste Größe der Daten bezeichnet,
$S_2$ die zweite Größe der Daten bezeichnet.

11. Einrichtung, die eine Verarbeitungseinheit umfasst, die so ausgelegt ist, dass das Verfahren nach einem der vorhergehenden Ansprüche darin ausführbar ist.

12. Einrichtung nach Anspruch 11, wobei die Einrichtung ein Netzelement oder ein Knoten eines Netzes, insbesondere eines paketorientierten Netzes, ist.

13. Kommunikationssystem, das mindestens eine Einrichtung nach Anspruch 11 oder Anspruch 12 umfasst.

**Revendications**

1. Procédé de traitement de données sur une connexion entre un premier noeud (101) et un second noeud (102),

   - où le premier noeud (101) transporte des premières données d'une première taille au second noeud (102) ;
   - où le second noeud (102) transporte des deuxièmes données d'une seconde taille au premier noeud (101) ;
   - où le premier noeud (101) détermine un premier temps (RTT$_1$) basé sur une durée entre le moment où les premières données sont envoyées et le moment où les deuxièmes données sont reçues ;
   - où le premier noeud (101) transporte des troisièmes données de la seconde taille au second noeud (102) ;
   - où le second noeud (102) transporte des quatrièmes données de la première taille au premier noeud (101) ;
   - où le premier noeud (101) détermine un second temps (RTT$_2$) basé sur une durée entre le moment où les troisièmes données sont envoyées et le moment où les quatrièmes données sont reçues ;
   - où la première taille et la seconde taille des données sont différentes.

2. Procédé selon la revendication 1, dans lequel le premier temps (RTT$_1$) et le second temps (RTT$_2$) sont des temps aller-retour, pour lesquels les retards de traitement sont éliminés.

3. Procédé selon l'une quelconque des revendications précédentes, dans lequel une largeur de bande de la liaison entre le premier noeud (101) et le second noeud (102) est déterminée.

4. Procédé selon la revendication 3, dans lequel la largeur de bande de la liaison entre le premier noeud (101) et le second noeud (102) est déterminée comme suit :

$$B_{ab} = \frac{S_2^2 - S_1^2}{(S_2.RTT_2) - (S_1.RTT_1)},$$

où

B$_{ab}$ désigne la largeur de bande de la liaison entre le premier noeud et le second noeud,
S$_1$ désigne la première taille des données,
S$_2$ désigne la seconde taille des données,
RTT$_1$ désigne le premier temps,
RTT$_2$ désigne le second temps.

5. Procédé selon l'une quelconque des revendications précédentes, dans lequel une largeur de bande de la liaison entre le second noeud (102) et le premier noeud (101) est déterminée.

6. Procédé selon la revendication 5, dans lequel la largeur de bande de la liaison entre le second noeud (102) et le premier noeud (101) est déterminée comme suit :

$$B_{ba} = \frac{S_2^2 - S_1^2}{(S_2.RTT_1) - (S_1.RTT_2)},$$

où

B$_{ba}$ désigne la largeur de bande de la liaison entre le second noeud et le premier noeud,
S$_1$ désigne la première taille des données,
S$_2$ désigne la seconde taille des données,
RTT$_1$ désigne le premier temps,
RTT$_2$ désigne le second temps.

7. Procédé selon l'une quelconque des revendications précédentes, dans lequel un retard sur la liaison entre le premier noeud (101) et le second noeud (102) est déterminé, en fonction notamment de la première taille de paquet et/ou de la seconde taille de paquet.

8. Procédé selon la revendication 7, dans lequel le retard sur la liaison entre le premier noeud (101) et le second noeud (102) est déterminé comme suit :

$$D_1 = \frac{S_1}{B_{ab}},$$

$$D_3 = \frac{S_2}{B_{ab}},$$

où

D$_1$ désigne le retard pour les premières données,
D$_3$ désigne le retard pour les troisièmes données,
B$_{ab}$ désigne la largeur de bande de la liaison entre le premier noeud et le second noeud,
S$_1$ désigne la première taille des données,
S$_2$ désigne la seconde taille des données.

**9.** Procédé selon l'une quelconque des revendications précédentes, dans lequel un retard sur la liaison entre le second noeud (102) et le premier noeud (101) est déterminé, en fonction notamment de la première taille de paquet et/ou de la seconde taille de paquet.

**10.** Procédé selon la revendication 9, dans lequel le retard sur la liaison entre le second noeud (102) et le premier noeud (101) est déterminé comme suit :

$$D_2 = \frac{S_2}{B_{ba}},$$

$$D_4 = \frac{S_1}{B_{ba}},$$

où

D$_2$ désigne le retard pour les secondes données,
D$_4$ désigne le retard pour les quatrièmes données,
B$_{ba}$ désigne la largeur de bande de la liaison entre le second noeud et le premier noeud,
S$_1$ désigne la première taille des données,
S$_2$ désigne la seconde taille des données.

**11.** Dispositif comprenant une unité de traitement qui est agencée de manière à ce que le procédé selon l'une quelconque des revendications précédentes puisse y être exécuté.

**12.** Dispositif selon la revendication 11, dans lequel ledit dispositif est un élément de réseau ou un noeud d'un réseau, en particulier d'un réseau orienté paquets.

**13.** Système de communication comprenant au moins un dispositif selon l'une quelconque des revendications 11 ou 12.

# Fig.1

$L_{ab}$: Link from node A to node B

$B_{ab}$: Bandwidth of link $L_{ab}$

$L_{ba}$: Link from node B to node A

$B_{ba}$: Bandwidth of link $L_{ba}$

## Fig.2

## REFERENCES CITED IN THE DESCRIPTION

**Patent documents cited in the description**

- US 20070223537 A

- US 20090147806 A

**Non-patent literature cited in the description**

- Standard for a Precision Clock Synchronization Protocol for Networked Measurement and Control Systems. *IEEE 1588-2002 standard,* 2008